# EUROPEAN PATENT APPLICATION

(11) **EP 4 708 419 A1**
(43) Date of publication of application: **11.03.2026**
(21) Application number: 25186116.7
(22) Date of filing: 30.06.2025
(51) Int. Cl.: H01M 10/04, H01M 50/533, H01M 50/54, H01M 50/553

(54) **DEVICE FOR MANUFACTURING SECONDARY BATTERY, AND METHOD OF MANUFACTURING SECONDARY BATTERY**

(30) Priority: 04.09.2024 KR 20240120218
(71) Applicant: SAMSUNG SDI CO., LTD., Yongin-si, Gyeonggi-do 17084 (KR)
(72) Inventor: KIM, Donghyun, 17084 Yongin-Si Gyeonggi-do (KR); SEO, Yejin, 17084 Yongin-si, Gyeonggi-do (KR); MOON, Eunjeong, 17084 Yongin-si, Gyeonggi-do (KR)
(74) Representative: Gulde & Partner

(57) **Abstract**

The invention relates to device (400) and a method for manufacturing a secondary battery (100). The resulting secondary battery (100) includes an electrode assembly (110) including a side that extends in a first direction, a case (150) accommodating the electrode assembly (110), a lead tab (132_1, 134_1) protruding from the side of the electrode assembly (110), and a strip terminal (142, 144) connected to the lead tab (132_1, 134_1). The lead tab (132_1, 134_1) is bent in the first direction. The strip terminal (240) includes a first section (242) connected to the lead tab (230) and extending in the first direction, and a second section (244) connected to the first section (242) and bent in a second direction that intersects the first direction. An angle between the first section (242) and the second section (244) is 90 degrees or less.

## Description

### BACKGROUND

### FIELD

The present disclosure relates to a secondary battery, a device for manufacturing the secondary battery, and a method for manufacturing the secondary battery.

### DESCRIPTION OF THE RELATED ART

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Recently, due to increasing customer demand for lighter secondary batteries used in portable IT devices, automobiles, and other applications, research into small-sized and thin batteries is being conducted. Conventionally, in order to make batteries smaller and thinner, methods such as reducing the thickness of materials used in secondary batteries, including substrates, separators, and external materials, or improving the physical properties of active materials to increase energy density, have been devised. However, the use of such methods may make secondary batteries less safe.

Accordingly, efforts to reduce the dead (i.e., open or unused) space inside the battery are ongoing. For example, methods have been proposed to increase the energy density of the battery by minimizing portions of the internal space that do not contribute to battery capacity. As batteries become smaller and thinner, more precise battery manufacturing devices and methods are required.

The above information disclosed in this Background section is for enhancement of understanding of the background of the present disclosure, and therefore, it may contain information that does not constitute related (or prior) art.

### SUMMARY

An aspect of the present disclosure provides a device for manufacturing the secondary battery, and a method for manufacturing the secondary battery.

These and other aspects and features of the present disclosure will be described in or will be apparent from the following description of embodiments of the present disclosure.

An aspect of the present disclosure provides a device for manufacturing a secondary battery, including: a support block configured to support an electrode assembly with a lead tab protruding from a side of the electrode assembly that extends in a first direction; a lower jig configured (i) to support a first section of a strip terminal connected to the lead tab and (ii) to move in a vertical direction and/or in a front-rear direction with respect to the electrode assembly; an upper jig disposed above the lower jig and configured to press the first section of the strip terminal; and a bending roller configured to bend a second section connected to the first section of the strip terminal by moving up and down in or along the first direction along a rear side of the lower jig, wherein the bending roller is configured to be moved and e.g. lowered, so that an angle between the first section and the second section becomes 90 degrees or less. Hence, due to the bending of the strip material resulting in the angle of 90 degrees or less between the first section and the second section, the lead tab is aligned to require less space while avoiding any unintended electrical contacts.

The bending roller may be configured to be moved or lowered a first time so that the angle between the first section and the second section becomes 90 degrees. An advantage of this embodiment may be that the strip terminal is easily prepositioned.

A height of an upper surface of the lower jig supporting the first section may correspond to a height of an upper surface of the support block supporting the electrode assembly. An advantage of this embodiment may be that the lead tab or several lead tabs can be prepositioned in a manner that allows for arranging the lead tab or the lead tabs in a space saving manner.

The bending roller may be configured to be lowered a second time so that the angle between the first section and the second section becomes less than 90 degrees. An advantage of this embodiment may be that bending the strip terminal in steps allows for more precise bending.

The bending roller may be configured to be lowered a second time or the second time so that the angle between the first section and the second section becomes 40 degrees or more and less than 90 degrees. For example, the angle may be less than 90 degrees and up to 85 degrees, up to 80 degrees, up to 75 degrees, up to 70 degrees, up to 65 degrees, up to 60 degrees, up to 55 degrees, up to 50 degrees, up to 45 degrees or at least 40 degrees. An advantage of this embodiment may be that the lead tab or the lead tabs can be better positioned to save more space while still avoiding unintended contacts.

The device may be configured such that when or while the bending roller is moved or lowered the second time, a height of an upper surface of the lower jig supporting the first section may be higher than a height of an upper surface of the support block supporting the electrode assembly. For example, the lower jig and the upper jig may be adapted to be moved with the first section of the strip terminal pressed therebetween, e.g. against the first direction before or while the bending roller is moved or lowered the second time, e.g. in the first direction. An advantage of this embodiment may be that the further bending of the strip terminal avoids unintended stretching of the lead tab or the lead tabs.

The device for manufacturing the secondary battery may further include a front guide disposed above the support block and configured to press the lead tab. An advantage of this embodiment may be that front guide by guiding the lead tab or the lead tabs support the bending of the strip terminal beyond 90 degrees.

The upper jig may be adapted to be moved towards the electrode assembly with the first section of the strip terminal pressed between the upper and the lower jig. An advantage of this embodiment may be that space is created for the first section while bending the strip terminal beyond 90 degrees, wherein the first section may swivel while being bent beyond 90 degrees.

Another aspect of the present disclosure provides a method of manufacturing a secondary battery, the method including: disposing an electrode assembly on a support block, the electrode assembly including a lead tab protruding from a side of the electrode assembly; disposing a first section of a strip terminal connected to the lead tab on a lower jig; lowering an upper jig to press and fix the first section; lowering a bending roller along a side of the lower jig to bend a second section of the strip terminal connected to the first section a first time; raising the lower jig and lowering the bending roller a second time along the side of the lower jig to bend the second section a second time; and moving the lower jig toward the electrode assembly to bend the lead tab. Hence, due to the bending of the strip material resulting in the angle of 90 degrees or less between the first section and the second section, the lead tab is aligned to require less space while avoiding any unintended electrical contacts.

The method may include setting a height of an upper surface of the lower jig supporting the first section to correspond to a height of an upper surface of the support block supporting the electrode assembly. An advantage of this embodiment may be that the lead tab or several lead tabs can be prepositioned in a manner that allows for arranging the lead tab or the lead tabs in a space saving manner.

The bending of the second section the second time may be such that a height of an upper surface of the lower jig supporting the first section is set to be higher than a height of an upper surface of the support block supporting the electrode assembly. For example, the lower jig and the upper jig may be moved with the first section of the strip terminal pressed therebetween, e.g. against the first direction before or while the bending roller is moved or lowered the second time, e.g. in the first direction. An advantage of this embodiment may be that the further bending of the strip terminal avoids unintended stretching of the lead tab or the lead tabs.

The bending of the second section the second time may be such that an angle between the first section and the second section becomes 90 degrees. An advantage of this embodiment may be that bending the strip terminal in steps allows for more precise bending.

The bending of the second section the second time may be such that an angle between the first section and the second section becomes less than 90 degrees. For example, the angle may be less than 90 degrees and up to 85 degrees, up to 80 degrees, up to 75 degrees, up to 70 degrees, up to 65 degrees, up to 60 degrees, up to 55 degrees, up to 50 degrees, up to 45 degrees or at least 40 degrees. An advantage of this embodiment may be that the lead tab or the lead tabs can be better positioned to save more space while still avoiding unintended contacts.

The bending of the lead tab may further include raising the lower jig before moving the lower jig forward toward the electrode assembly. An advantage of this embodiment may be that the bending roller can bend the strip terminal directly while the lower jig moves toward the electrode assembly reducing time required for bending.

The lead tab may be bent to face the one side of the electrode assembly. As the lead tab is bent, the strip terminal may rotate so that the first section of the strip terminal may be disposed to face the side of the electrode assembly. An advantage of this embodiment may be that the form of the bent strip terminal is maintained and/or that the lead tab or the lead tabs are positioned efficiently.

The first section of the strip terminal may be spaced from the side of the electrode assembly by a predetermined distance or more. An advantage of this embodiment may be that unintended contacts between the strip terminal and the electrode assembly are avoided.

The vertical direction may be designated as first direction. The lower jig may be configured to move in a front-rear direction with respect to the electrode assembly. The front-rear direction may extend parallel to electrode plates of the electrode assembly placed on the support block. The front-rear direction may extend from a side of the electrode assembly opposite the lead tab to a side of the electrode assembly from which the lead tab protrudes. The front-rear direction may extend from the support block towards the lower jig. The lower jig may be configured to move along the side of the electrode assembly from which the lead tab protrudes. The upper surface of the lower jig may extend perpendicular to the vertical direction. Electrode plates of the electrode assembly may be arranged parallel to the upper surface when the electrode assembly is supported in the lower jig and for example on the upper surface of the lower jig. The side from which the lead tab protrudes may be aligned perpendicular to the upper surface and/or parallel to the vertical direction. The lead tab may at least sectionwise protrude from the side parallel to the upper surface and/or perpendicular to the vertical direction. The upper jig may be disposed behind the lower jig in the vertical direction. The first section of the strip terminal may be arranged between the upper jig and the lower jig in the vertical direction when the electrode assembly is arranged on the support block. The rear side of the lower jig may extend along the vertical direction and/or face away from the support block. The bending roller may be configured to press the second section of the strip material against the rear side.

According to some embodiments of the present disclosure, as the strip terminal is bent at an angle of 90 degrees or less, the internal space of the battery may be maximized, thereby increasing the energy density of the battery.

An embodiment of the present disclosure provides a secondary battery including: an electrode assembly including a side that extends in a first direction; a case accommodating the electrode assembly; a lead tab protruding from the side of the electrode assembly; and a strip terminal connected to the lead tab, wherein the lead tab is bent in the first direction, the strip terminal includes a first section connected to the lead tab and extending in the first direction, and a second section connected to the first section and bent in a second direction that intersects the first direction, and an angle between the first section and the second section is 90 degrees or less.

The angle between the first section and the second section may be 40 degrees or more.

The first section of the strip terminal may be spaced from the side of the electrode assembly by a predetermined distance or more.

A distance between the first section of the strip terminal and the side of the electrode assembly may be constant or decrease toward the second section of the strip terminal.

A distance between the first section of the strip terminal and the side of the electrode assembly may be less than 0.5 mm.

According to some embodiments of the present disclosure, the risk of damage to the electrode assembly due to sagging of the strip terminal may be reduced, thereby making the battery safter.

According to some embodiments of the present disclosure, by adding a process of lowering the bending roller a second time, the strip terminal may be bent to an angle of less than 90 degrees while using a lower jig having a corner angle of 90 degrees.

However, aspects and features of the present disclosure are not limited to those described above, and other aspects and features not mentioned will be clearly understood by a person skilled in the art from the detailed description, described below.

### BRIEF DESCRIPTION OF DRAWINGS

The drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view of a secondary battery according to an embodiment of the present disclosure.
FIG. 2 is a side cross-sectional view of a secondary battery according to an embodiment of the present disclosure.
FIG. 3 is a partially enlarged view of a secondary battery according to an embodiment of the present disclosure.
FIG. 4 is a block diagram of a configuration of a device for manufacturing a secondary battery according to an embodiment of the present disclosure.
FIG. 5 shows a method of manufacturing a secondary battery according to an embodiment of the present disclosure.
FIG. 6 shows a method of manufacturing a secondary battery according to an embodiment of the present disclosure.
FIG. 7 shows a method of manufacturing a secondary battery according to an embodiment of the present disclosure.
FIG. 8 shows a method of manufacturing a secondary battery according to an embodiment of the present disclosure.
FIG. 9 shows a method of manufacturing a secondary battery according to an embodiment of the present disclosure.
FIG. 10 shows a method of manufacturing a secondary battery according to an embodiment of the present disclosure.
FIG. 11 shows a bending angle of a strip terminal according to an embodiment of the present disclosure.
FIG. 12 illustrates a comparative example of a secondary battery.
FIG. 13 is a flowchart of a method of manufacturing a secondary battery according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the sizes and relative sizes of the areas shown in the drawings may be exaggerated for clarity of description. In other words, the sizes shown in the drawings are for understanding and is the present disclosure not limited thereto. Throughout the specification, the same reference numerals denote the same constituent elements.

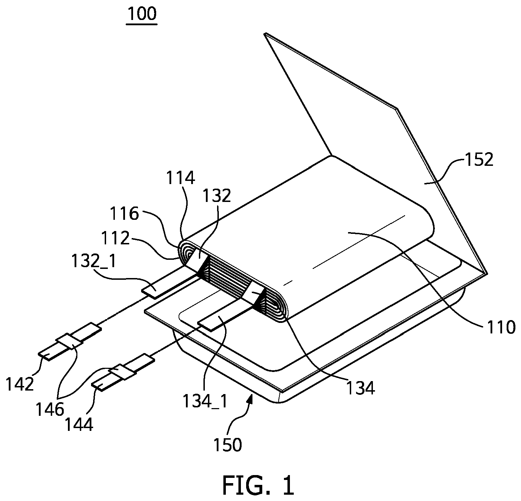

FIG. 1 is a perspective view of a secondary battery 100 according to an embodiment of the present disclosure. As illustrated, a secondary battery 100 may include a case 150 and an electrode assembly 110 disposed inside the case 150.

The electrode assembly 110 may include a first electrode 112, a second electrode 114, and a separator 116 interposed between the electrodes 112 and 114. The first electrode 112 and the second electrode 114 may be wound with the separator 116 acting as an insulator interposed therebetween. However, the present disclosure is not limited thereto, and the electrode assembly 110 may have a structure in which the first electrode 112 and the second electrode 114 are each made of a plurality of sheets and are alternately stacked with the separator 116 therebetween.

The first electrode 112 may include a first substrate, a first coated portion where an active material is disposed on the first substrate, and a first uncoated portion where the substrate is exposed because no active material is disposed. In embodiments, the first electrode 112 may function as a positive electrode. In this case, the first substrate may be made of, for example, aluminum foil, and the first active material layer may include, for example, a transition metal oxide.

The second electrode 114 may include a second substrate, a second coated portion where an active material is disposed on the second substrate, and a second non-coated portion where the substrate is exposed because no active material is disposed. In the embodiment, the second electrode 114 may function as a negative electrode. In this case, the second substrate may be made of, for example, copper foil or nickel foil, and the second active material layer may include, for example, graphite.

A plurality of first electrode tabs 132 that are electrically connected to a first non-coated portion may be formed/connected on one side of the first electrode 112. For example, the first electrode tab 132 may be a base tab using a portion of the non-coated portion. Each of the first electrode tabs 132 may protrude to a specific position of the electrode assembly 110, and the first electrode tabs 132 may be connected to form a first lead tab 132_1.

A plurality of first electrode tabs 132 that are electrically connected to the first non-coated portion may be formed/connected on one side of the second electrode 114. For example, the second electrode tab 134 may be a base tab using a portion of the non-coated portion. Each of the second electrode tabs 134 may protrude to a specific position of the electrode assembly 110, and the second electrode tabs 134 may be connected to form a second lead tab 134_1.

The positions where the first electrode tabs 132 protrude from the electrode assembly 110 and where the second electrode tabs 134 protrude from the electrode assembly 110 may differ from each other. For example, the first electrode tabs 132 may protrude from a first side of the electrode assembly 110, while the second electrode tabs 134 may protrude from a second side of the electrode assembly 110. In some embodiments, the first electrode tabs 132 and the second electrode tabs 134 may protrude from the same side of the electrode assembly 110 and be spaced apart from each other.

The first lead tab 132_1 may be connected to a first strip terminal 142. The first lead tab 132_1 may provide a current flow path between the first electrode 112 and the first strip terminal 142. One end of the first strip terminal 142 may be connected to the first lead tab 132_1 and disposed inside the case 150, while the other end of the first strip terminal 142 protrude outside the case 150. A tab film 146 may be attached to the first strip terminal 142 for insulation from the case 150.

The second lead tab 134_1 may be connected to a second strip terminal 144. The second lead tab 134_1 may provide a current flow path between the second electrode 114 and the second strip terminal 144. One end of the second strip terminal 144 may be connected to the second lead tab 134_1 and disposed inside the case 150, while the other end of the second strip terminal 144 may protrude outside the case 150. A tab film 146 may be attached to the second strip terminal 144 for insulation from the case 150.

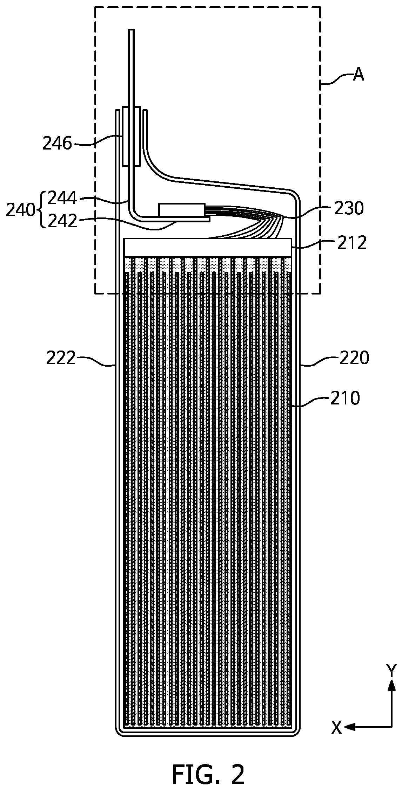

In the embodiment, the first lead tab 132_1 and the first strip terminal 142 may be bent while being connected to each other. Additionally, the second lead tab 134_1 and the second strip terminal 144 may be bent while being connected to each other. Examples of the method by which the lead tabs and the strip terminals are bent are described in detail with reference to FIG. 2 to FIG. 11.

The separator 116 may function to allow the movement of lithium ions while preventing a short circuit between the first electrode 112 and the second electrode 114. The separator 116 may be made of, for example, a polyethylene film, polypropylene film, polyethylene-polypropylene film, or other materials, but the present disclosure is not limited thereto.

The case 150 forms the outer appearance of the secondary battery 100 and may provide a space in which the electrode assembly 110 is accommodated. An opening for inserting the electrode assembly 110 may be formed at one side of the case 150. An electrolyte may be injected into the inside of the case 150 in which the electrode assembly 110 is accommodated, and the opening of the case 150 may be sealed by a case cover 152. The case 150 may be made of a conductive metal such as aluminum, an aluminum alloy, or nickel-plated steel. In other embodiments, the case 150 may be made a laminate film or plastic configured as a pouch.

In FIG. 1, the case 150 is illustrated as a pouch-type case, and the secondary battery 100 is illustrated as a pouch-type secondary battery. But the present disclosure is not limited to such a configuration. The secondary battery 100 may be a secondary battery of any shape, such as prismatic, cylindrical, or pouch-type.

In the embodiment, the secondary battery 100 may be a lithium secondary battery or a sodium secondary battery. However, the present disclosure is not limited thereto, and the secondary battery 100 includes all batteries capable of repeatedly providing electricity through charging and discharging.

The configuration of the secondary battery 100 shown in FIG. 1 is only an example, and in some embodiments, other components may be included in addition to the illustrated components and some components may be omitted. Furthermore, the shape, positional relationships, and other aspects of respective components of the secondary battery 100 shown in FIG. 1 may be modified.

FIG. 2 is a side cross-sectional view of a secondary battery according to an embodiment of the present disclosure. Referring to FIG. 2, the secondary battery may include a case 220 and an electrode assembly 210 accommodated inside the case 220. The case 220 in which the electrode assembly 210 is accommodated may be sealed by a case cover 222.

A lead tab 230 may protrude from a side of the electrode assembly 210. The electrode assembly 210 may be configured by stacking a plurality of electrodes and separators, and a plurality of electrode tabs connected to the respective electrodes may protrude from a side of the electrode assembly 210. The protruding electrode tabs may be connected to each other to form the lead tab 230. In the embodiment, the electrode tabs may be towards one side with respect to the width direction (X axis) of the electrode assembly.

In the embodiment, the electrode assembly 210 may include an insulating member 212. The insulating member 212 may be disposed on the side of the electrode assembly 210 from which the lead tab 230 protrudes. The lead tab 230 may pass through the insulating member 212 and protrude from the upper surface of the insulating member 212, but the present disclosure is not limited thereto. The insulating member 212 may prevent the end portion of the lead tab 230 or a strip terminal 240 connected to the lead tab 230 from contacting the electrode assembly 210, which may cause a short circuit.

The lead tab 230 may be connected to the strip terminal 240. One end of the strip terminal 240 is connected to the lead tab 230, and the other end thereof may protrude outside the case 220. As the strip terminal 240 protrudes to outside, a tab film 246 may be disposed at the point where the strip terminal 240 passes by the case 220 and the case cover 222. The tab film 246 may insulate the strip terminal 240 from the case 220 and the case cover 222.

The lead tab 230 may be bent in a first direction (e.g., in the X-axis direction) along one side of the electrode assembly 210. That is, the lead tab 230 may have a section that is bent so as to be substantially parallel to one side of the electrode assembly 210. The bent lead tab 230 may be positioned between a side of the electrode assembly 210, from which the lead tab 230 protrudes, and the inner surface of the case 220 facing the side of the electrode assembly 210.

The strip terminal 240 may be bent while being connected to the lead tab 230. The strip terminal 240 may include a first section 242 connected to the lead tab 230 and a second section 244 bent in a direction intersecting the first section 242. In the first section 242, the strip terminal 240 may be disposed in a first direction that is substantially parallel to a side of the electrode assembly 210. In the embodiment, the end portion of the first section 242 may overlap to be connect to the lead tab 230. The second section 244 may be bent in the direction toward outside of the case 220 so that at least a portion of the second section 244 protrudes outside the case 220.

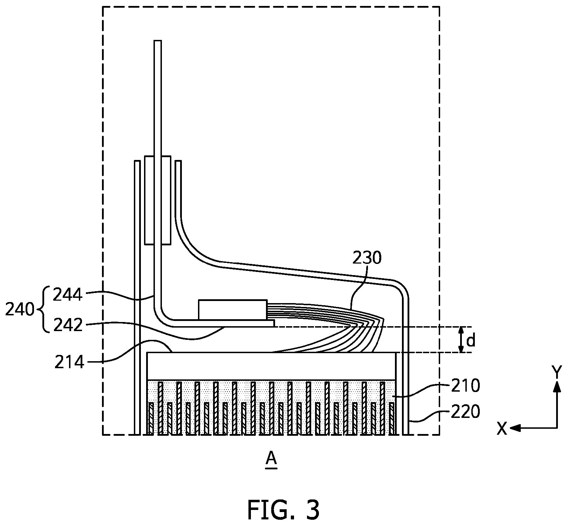

In the embodiment, the angle formed between the first section 242 and the second section 244 of the strip terminal 240 may be less than or equal to 90 degrees. That is, when the electrode assembly 210 is accommodated inside the case 220, the angle formed between the first section 242 and the second section 244 of the strip terminal 240 may be less than or equal to 90 degrees. Additionally, the first section 242 of the strip terminal 240 may be spaced apart from one side of the electrode assembly 210 from which the lead tab 230 protrudes by a certain distance or more. Detailed examples of the bending angle of the strip terminal 240 and the spacing distance between the strip terminal 240 and the electrode assembly 210 will be described in detail below with reference to FIG. 3.

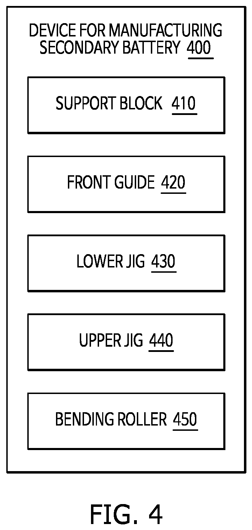

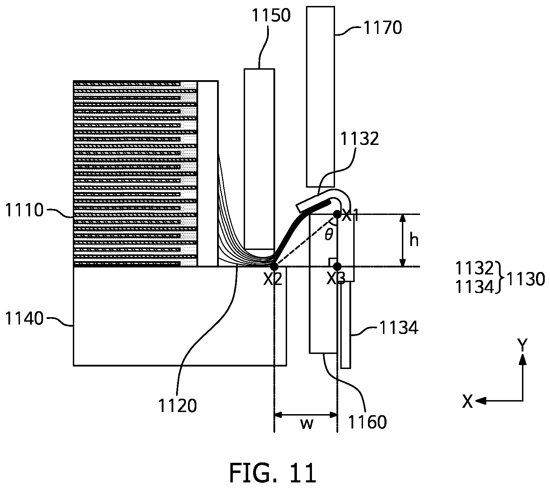

In the embodiment, during the step of bending the strip terminal 240, the strip terminal 240 may be bent at an angle less than 90 degrees. Accordingly, even when the strip terminal 240 sags or springs-back after the electrode assembly 210 is accommodated in the case 220, the angle between the first section 242 and the second section 244 of the strip terminal 240 may be 90 degrees or less. A device and method for bending the strip terminal 240 at an angle less than 90 degrees will be described in detail below with reference to FIG. 4 to FIG. 10. In addition, in the bending step of the strip terminal 240, a specific example of the range of angles at which the strip terminal 240 is bent will be described in detail below with reference to FIG. 11.

FIG. 3 is a partially enlarged view of a secondary battery according to an embodiment of the present disclosure, specifically, a partially enlarged view of area "A" of FIG. 2. Referring to FIG. 3, the lead tab 230 may protrude from one side 214 of the electrode assembly 210, and the protruding lead tab 230 may be bent in a first direction (for example, an X-axis direction) so that the protruding lead tab 230 is made to extend along the side 214 of the electrode assembly 210.

The lead tab 230 may be connected to the strip terminal 240. The strip terminal 240 may be bent while it is connected to the lead tab 230. As a result of the bending, the strip terminal 240 may include a first section 242 connected to the lead tab 230 and a second section 244 bent in a direction intersecting the direction of the first section 242.

In an embodiment, the first section 242 of the strip terminal 240 may extend in the same direction as the direction in which the lead tab 230 is bent. The second section 244 of the strip terminal 240 may be bent in the direction toward the outside of the case 220, so that at least a portion of the second section 244 protrudes outside the case 220. The direction in which the second section 244 extends may be a direction (Y-axis) that is substantially perpendicular to the direction in which one side 214 of the electrode assembly 210 extends (X-axis).

The first section 242 of the strip terminal 240 may be spaced apart from the side 214 of the electrode assembly 210 from which the lead tab 230 protrudes. The strip terminal 240 may be spaced from that side 214 of the electrode assembly 210 by a certain distance (d) or more such that it does not contact the electrode assembly 210. The distance (d) by which the strip terminal 240 is spaced from one side 214 of the electrode assembly 210 may be, for example, 0.5 mm or less, and preferably may be 0.1 mm to 0.3 mm. But the present disclosure is not limited to such distances.

The angle formed between the first section 242 and the second section 244 of the strip terminal 240 may be less than or equal to 90 degrees. For example, the angle formed between the first section 242 and the second section 244 of the strip terminal 240 may be 90 degrees. In such a case, the first section 242 of the strip terminal 240 may be substantially parallel to the side 214 of the electrode assembly 210, and the distance d between the first section 242 of the strip terminal 240 and the side 214 of the electrode assembly 210 may be uniform throughout the entire first section 242. "Substantially parallel" in this context means that the direction in which the first section 242 of the strip terminal 240 is disposed is either parallel to or close to parallel with one side of the electrode assembly 210. But the present disclosure is not limited to such an embodiment.

In another example, the angle formed between the first section 242 and the second section 244 of the strip terminal 240 may be less than 90 degrees. In such an embodiment, the first section 242 of the strip terminal 240 may be formed to be inclined downward toward the electrode assembly 210 in a direction towards the second section 244. Accordingly, the distance d between the first section 242 of the strip terminal 240 and the side 214 of the electrode assembly 210 decreases in a direction towards the second section 244 of the strip terminal 240.

In other embodiments, the angle formed between the first section 242 and the second section 244 of the strip terminal 240 may be less than 90 degrees but such that the strip terminal 240 does not contact with the side 214 of the electrode assembly 210. In a specific example, the angle between the first section 242 and the second section 244 of the strip terminal 240 may be greater than or equal to 40 degrees, but the present disclosure is not limited to this example.

The lead tab 230 and the first section 242 of the strip terminal 240 may be positioned in the space between the electrode assembly 210 and the case 220. For example, the lead tab 230 and the first section 242 of the strip terminal 240 may be disposed between the side 214 of the electrode assembly 210 and the inner surface of the case 220 that faces the side 214 of the electrode assembly 210. In this configuration, as the first section 242 and the second section 244 of the strip terminal 240 are bent at an angle less than or equal to 90 degrees, the space in which the lead tab 230 and the first section 242 of the strip terminal 240 are disposed is reduced.

As the angle between the first section 242 and the second section 244 of the strip terminal 240 increases, the space occupied by the lead tab 230 and the strip terminal 240 in the height direction (Y-axis) of the electrode assembly 210 also increases. And as the space occupied by the lead tab 230 and the strip terminal 240 increases, the portion of the secondary battery contributing to the battery capacity (for example, the electrode assembly) decreases, resulting in reduced energy density. Also, as the angle between the first section 242 and the second section 244 of the strip terminal 240 increases, the tension occurring in the first section 242 of the strip terminal 240 connected to the lead tab 230 due to the rigidity of the lead tab 230 increases, which may cause the first section 242 to sag towards the side 214 of the electrode assembly 210. In such a case, the electrode assembly 210 may be damaged by the strip terminal 240.

Therefore, by bending the strip terminal 240 to an angle less than or equal to 90 degrees, the internal space of the battery that does not contribute to the battery capacity is minimized, and the energy density of the battery may be maximized. In addition, the risk of damage to the electrode assembly 210 caused by sagging of the strip terminal 240 is reduced, thereby making the battery safer.

FIG. 4 is a block diagram of a configuration of a device 400 for manufacturing a secondary battery according to an embodiment of the present disclosure. In an embodiment, the device 400 for manufacturing the secondary battery may be a bending device for bending a lead tab and a strip terminal of a secondary battery. The device 400 for manufacturing the secondary battery may include a support block 410, a front guide 420, a lower jig 430, an upper jig 440, and a bending roller 450.

The support block 410 may support the electrode assembly. The lead tab may protrude from a side of the electrode assembly, and the strip terminal may be connected to the lead tab. The electrode assembly may be disposed on the support block 410 so that the lead tab and strip terminal protrude beyond the support block 410.

The front guide 420 may press and fix the lead tab that protrudes from the electrode assembly. The front guide 420 is disposed on the upper portion of the support block 410 and may move vertically to press and fix the lead tab on the upper portion of the lead tab.

The lower jig 430 may support the first section in which the lead tab and the strip terminal are connected. The lower jig 430 may move vertically or forward and backward while supporting the first section in which the lead tab and strip terminal are connected.

The upper jig 440 may press and fix the first section in which the lead tab and strip terminal are connected. The upper jig 440 is disposed above the lower jig 430 and may move vertically from the upper portion of the first section to press and fix the first section.

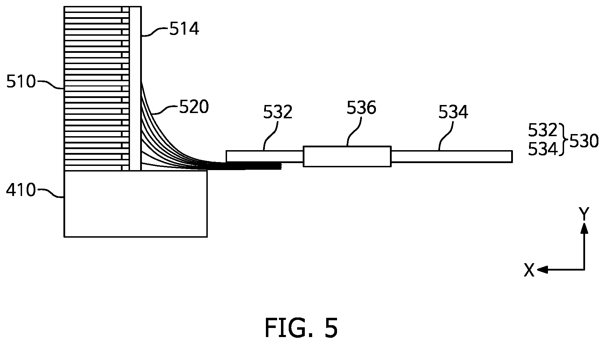

The bending roller 450 may bend the strip terminal. The bending roller 450 may move vertically to bend the second section connected to the first section while the first section of the strip terminal is supported by the lower jig 430 and pressed and fixed by the upper jig 440. The bending roller 450 may be lowered at least twice to bend the strip terminal at an angle less than 90 degrees. Examples of the method by which the strip terminal is bent will be described in detail below with reference to FIG. 5 to FIG. 10.

The configuration of the device for manufacturing the secondary battery 400 shown in FIG. 4 is only an example, and in other embodiments further components may be included in addition to the illustrated components, and some of the illustrated components may be omitted. When some of the aforementioned components are omitted, the functions of the omitted components may be performed by components other than the illustrated components.

FIG. 5 to FIG. 10 show a method of manufacturing a secondary battery according to an embodiment of the present disclosure. For better understanding and ease of description, a direction in which the lead tab 520 protrudes from the side 514 of the electrode assembly 510 is defined as a rearward direction, and an opposite direction is defined as a forward direction. A direction in which the electrode assembly 510 is disposed on the support block 410 is defined as an upward direction, and an opposite direction is defined as a downward direction.

Referring to FIG. 5, the electrode assembly 510 may be disposed on the upper portion of the support block 410 with the lead tab 520 protruding from the side 514 of the electrode assembly 510. The electrode assembly 510 may be disposed so that the side 514 of the electrode assembly 510 is perpendicular to the upper surface of the support block 410. The strip terminal 530 may overlap the lead tab 520 to be connected to it. The support block 410 may support the electrode assembly 510 and a portion of the lead tab 520. For example, a portion of the lead tab 520 adjacent to the electrode assembly 510 may be disposed on the upper portion of the support block 410, and the remaining portion of the lead tab 520 and the strip terminal 530 may protrude rearward of the support block 410 for the bending process.

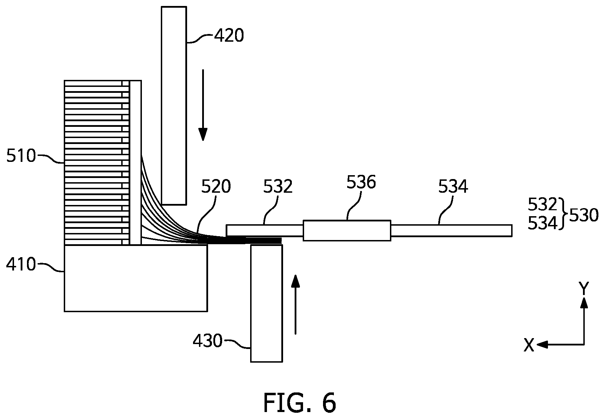

Referring to FIG. 6, the electrode assembly 510 disposed on the support block 410 may be pressed and fixed by the front guide 420. The front guide 420 is disposed above the support block and may move in the vertical direction (that is, the first direction along one side of the electrode assembly 510) above the upper portion of the lead tab 520 of the electrode assembly 510. The front guide 420 may be lowered toward the support block 410 to press and fix the lead tab 520 disposed on the support block 410.

The first section 532, where the lead tab 520 and the strip terminal 530 are connected, may be supported by the lower jig 430. The lower jig 430 is disposed rearward of the support block 410 and may move up and down or forward and backward with respect to the electrode assembly 510 while supporting the first section 532. In the state in which the lead tab 520 is pressed and fixed by the front guide 420, the lower jig 430 may support the first section 532 from below. In this configuration, the height of the upper surface of the lower jig 430 supporting the first section 532 may correspond to the height of the upper surface of the support block 410 supporting the electrode assembly 510.

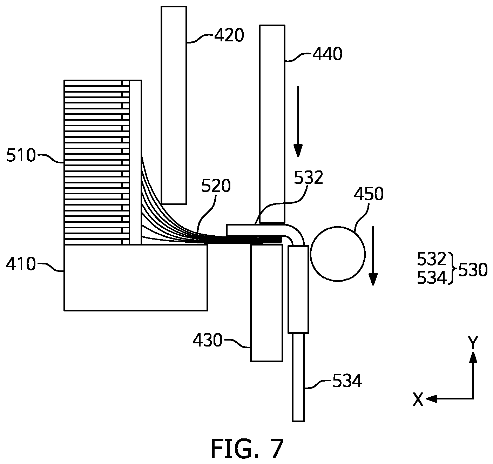

Referring to FIG. 7, the first section 532 may be pressed and fixed by the upper jig 440. The upper jig 440 is disposed above the lower jig 430 and may move in the vertical direction on the upper portion of the first section 532. That is, the upper jig 440 may be lowered toward the lower jig 430 to press and fix the first section 532 of the strip terminal 530 disposed on the lower jig 430.

The bending roller 450 may bend the second section 534 while the first section 532 of the strip terminal 530 is pressed and fixed by the upper jig 440. The bending roller 450 is disposed rearward of the lower jig 430 and may move vertically or forward and backward. The bending roller 450 may be lowered along the rear side of the lower jig 430 to bend the second section 534 of the strip terminal 530.

The angle formed between the first section 532 and the second section 534 of the strip terminal 530 when the strip terminal 530 is bent may correspond to the corner angle of the lower jig 430 that contacts the strip terminal 530. For example, the upper surface and rear surface of the lower jig 430, which contact the strip terminal 530, are perpendicular to each other. Accordingly, the first section 532 and the second section 534 of the strip terminal 530 may be bent to be substantially perpendicular to each other. Herein, the term "substantially perpendicular" means perpendicular or close to perpendicular. But the present disclosure is not limited to the first section 532 and the second section 534 being bent to be perpendicular or substantial perpendicular to each other.

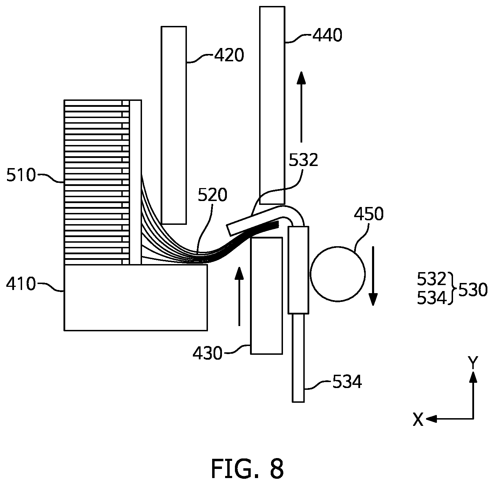

Referring to FIG. 8, the lower jig 430 and the upper jig 440 may be raised when the second section 534 of the strip terminal 530 is bent Accordingly, the first section 532 interposed between the lower jig 430 and the upper jig 440 may be positioned above the support block 410. In this case, the first section 532 of the strip terminal 530 may be disposed to be inclined downward toward the support block 410. That is, due to the height difference between the upper surface of the support block 410 that supports the electrode assembly 510 and the upper surface of the lower jig 430 that supports the first section 532, the first section 532 may be inclined.

The bending roller 450 may bend the second section 534 of the strip terminal 530 while the first section 532 is inclined and the lower jig 430 is raised. The bending roller 450 may be lowered along the rear side of the lower jig 430 to bend the second section 534 of the strip terminal 530. In this case, the angle formed between the first section 532 and the second section 534 of the strip terminal 530 is less than 90 degrees.

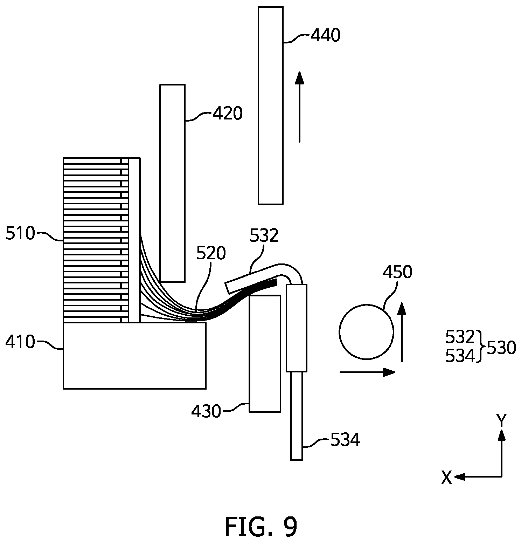

Referring to FIG. 9, in a state in which the second section 534 of the strip terminal 530 is bent, the upper jig 440 may be raised. Accordingly, the pressure from the upward direction of the first section of the strip terminal 530 may be removed. Additionally, by moving the bending roller 450 rearward and/or upward, a space may be provided for rotation and movement of the strip terminal 530.

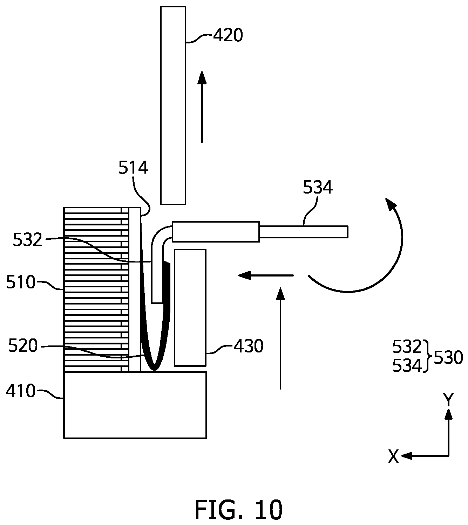

Referring to FIG. 10, the front guide 420 may be raised. Accordingly, the pressure applied to the lead tab 520 from the upward direction may be removed, and a space may be provided for the strip terminal 530 to rotate and move toward the electrode assembly 510.

In the state in which the front guide 420 is raised, the lower jig 430 may move forward and/or upward. As the lower jig 430 moves, the lead tab 520 may be bent to face one side 514 of the electrode assembly 510. Additionally, as the lead tab 520 is bent, the strip terminal 530 may rotate. As the strip terminal 530 rotates toward the electrode assembly 510, the first section 532 of the strip terminal 530 may be disposed to face one side 514 of the electrode assembly 510.

As shown in FIG. 10, the first section 532 of the strip terminal 530 may be positioned substantially parallel to one side 514 of the electrode assembly 510. Further, the first section 532 may be spaced apart from one side 514 of the electrode assembly 510 by a certain distance or more. For example, the distance between the first section 532 and the side 514 of the electrode assembly 510 may be 0.5 mm or less, and preferably, may be 0.1 mm to 0.3 mm. But the present disclosure is not limited to such distances.

With this configuration, the strip terminal 530 may be bent to an angle less than 90 degrees by adding a process of lowering the bending roller 450 without changing the shape of the lower jig 430 of the device for manufacturing the secondary battery. For example, to bend the strip terminal 530 at an angle less than 90 degrees, a method of processing the corner angle of the lower jig 430 in contact with the strip terminal 530 to be less than 90 degrees may be considered. However, when a bending device is used for strip terminals for small or thin batteries, the width of the lower jig 430 is typically about 0.8 mm or less, so it may be difficult to process the corner angle of the lower jig 430 to less than 90 degrees. But according to the present disclosure, the strip terminal 530 may be bent at an angle less than 90 degrees even with the lower jig 430 having a corner angle of 90 degrees by adding a step of lowering the bending roller 450.

FIG. 11 is a drawing for describing a bending angle of a strip terminal 1130 according to an embodiment of the present disclosure. A device for manufacturing a secondary battery may include a support block 1140 that supports an electrode assembly 1110, a front guide 1150 that presses and fixes a lead tab 1120 protruding from the electrode assembly 1110, a lower jig 1160 that supports a first section 1132 in which the lead tab 1120 and a strip terminal 1130 are connected, and an upper jig 1170 that presses and fixes the first section 1132. Although not shown, the device for manufacturing the secondary battery may also include a bending roller for bending a second section 1134 connected to the first section 1132 of the strip terminal 1130.

FIG. 11 illustrates a state in which the strip terminal 1130 is bent by the bending roller. For better understanding and ease of description, a direction in which the lead tab 1120 protrudes from one side of the electrode assembly 1110 is defined as a rearward direction, and an opposite direction is defined as a forward direction. A direction in which the electrode assembly 1110 is disposed on the support block 1140 is defined as an upward direction, and an opposite direction is defined as a downward direction.

Referring to FIG. 11, the angle formed between the first section 1132 and the second section 1134 of the strip terminal 1130 may be less than 90 degrees. In this case, the angle (e) formed between the first section 1132 and the second section 1134 may be determined based on the positional relationship of the support block 1140, the front guide 1150, and the lower jig 1160. In particular, the angle (e) formed between the first section 1132 and the second section 1134 may be determined based on the height difference (h) in the vertical direction (Y-axis) between the lower jig 1160 and the support block 1140, and the separation distance (w) in the horizontal direction (X-axis) between the front guide 1150 and the lower jig 1160.

In embodiments, the strip terminal 1130 may be bent while in contact with the corner formed by the upper surface and the rear side of the lower jig 1160 at a first position X1. Additionally, the lead tab 1120 connected to the strip terminal 1130 may be pressed and fixed to the rear side of the front guide 1150 in the horizontal direction (X-axis)by the upper surface of the support block 1140 in the vertical direction (Y-axis) at a second position X2. The vertical distance h between the first position X1 and the second position X2 may be determined based on the raised height of the lower jig 1160. Further, based on the separation distance between the front guide 1150 and the lower jig 1160, the horizontal distance w between the first position X1 and the second position X2 may be determined.

In an example, the horizontal distance w between the first position X1 and the second position X2 may be set to 1.15 mm and, the vertical distance h between the first position X1 and the second position X2 may be set to be 0.3 mm to 1.3 mm. In this case, the angle (e) formed between the first section 1132 and the second section 1134 may be approximately 41.50 degrees to 75.38 degrees.

That is, the angle (e) formed between the first section 1132 and the second section 1134 of the strip terminal 1130 may be less than 90 degrees and may be appropriately adjusted within a range of 40 degrees or more and less than 90 degrees with consideration to the possible sagging or springing-back of the strip terminal 1130 due to the stiffness of the lead tab 1120.

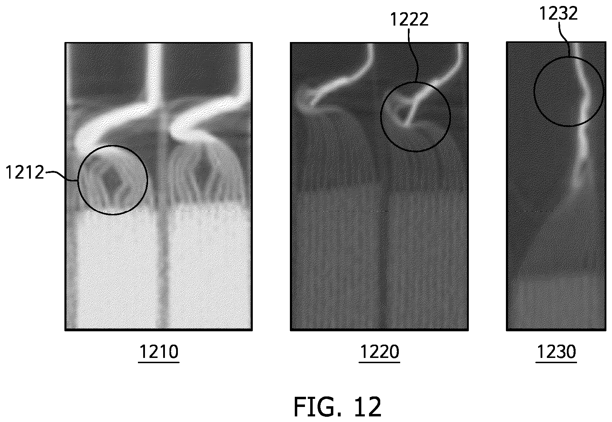

FIG. 12 is a drawing of a comparative example of a secondary battery. Example 1 to Example 3 (1210 to 1230) illustrate cases in which the strip terminal is bent at an angle greater than 90 degrees.

Referring to Example 1 (1210), an area 1212 in which the lead tab is bent can be seen. When the strip terminal is bent at an angle greater than 90 degrees, the strip terminal may sag in the direction of the lead tab. In this case, there is increased tension applied to the strip terminal, which may break the lead tab.

Referring to Example 2 (1220), an area 1222 in which the strip terminal pierces the lead tab can be seen. When the strip terminal is bent at an angle greater than 90 degrees, the strip terminal may sag in the direction of the lead tab, interfering with the lead tab and/or the electrode assembly. In this case, a short circuit may occur due to damage to the lead tab and/or the electrode assembly.

Referring to Example 3 (1230), due to the tension applied to the strip terminal, an area 1232 in which the angle at which the strip terminal is bent is increased. In this case, the electrode assembly may not be accommodated in the case, and even in a case where accommodated, the space occupied by the strip terminal inside the case may increase, resulting in a decrease in the energy density of the battery.

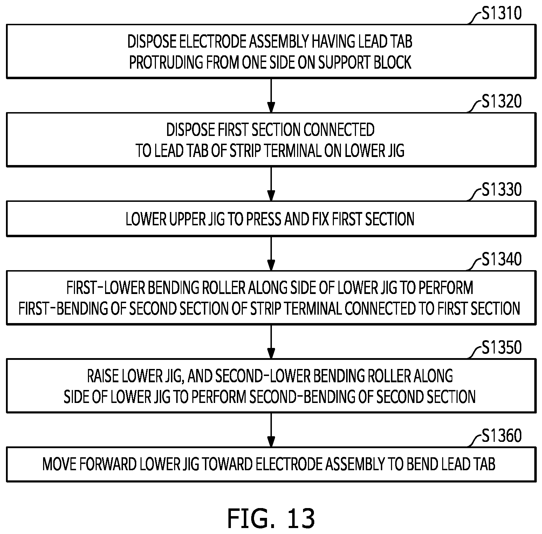

FIG. 13 is a flowchart 1300 for describing a method for manufacturing a secondary battery according to an embodiment of the present disclosure. The method for manufacturing the secondary battery may include disposing the electrode assembly having the lead tab protruding from one side thereof on the support block (S1310). Then, the first section, which is connected to the lead tab of the strip terminal, may be disposed on the lower jig (S1320). In an embodiment, the height of the upper surface of the lower jig supporting the first section may be set to correspond to the height of the upper surface of the support block supporting the electrode assembly. Additionally, the upper jig may be lowered to press and fix the first section (S1330).

Next, the bending roller may be lowered along the side of the lower jig to perform a first bending of the second section of the strip terminal that is connected to the first section (S1340). In this case, the first bending of the second section of the strip terminal may include bending the strip terminal so that the angle between the first section and the second section becomes 90 degrees.

Then, the lower jig may be raised, and the bending roller may be lowered a second time along the side of the lower jig to perform a second bending of the second section (S1350). In this case, the height of the upper surface of the lower jig supporting the first section may be higher than the height of the upper surface of the support block supporting the electrode assembly. Additionally, the second bending of the second section of the strip terminal may include bending the strip terminal so that the angle between the first section and the second section is less than 90 degrees.

Next, the lower jig may move forward toward the electrode assembly to bend the lead tab (S1360). In this case, raising the lower jig may be further included before moving the lower jig forward toward the electrode assembly. Thus, the lead tab may be bent to face one side of the electrode assembly. Additionally, as the lead tab is bent, the strip terminal may rotate, so that the first section of the strip terminal is disposed to face a side of the electrode assembly. Further, the first section of the strip terminal may be disposed so as to be spaced from the side of the electrode assembly by a predetermined distance or more.

The flowchart in FIG. 13 and the above description are merely examples of the present disclosure, and the scope of the present disclosure is not limited to the flowchart in FIG. 13 and the above description. For example, one or more steps of the flowchart and the above description may be added, changed, or deleted, the order of one or more steps may be changed, and one or more steps may be simultaneously performed.

Although the present disclosure has been described above with respect to embodiments thereof, the present disclosure is not limited thereto. Various modifications and variations can be made thereto by those skilled in the art within the spirit of the present disclosure.

## Claims

1. A device (400) for manufacturing a secondary battery (100), the device comprising:
a support block (410) configured to support an electrode assembly (510) with a lead tab (520) protruding from a side of the electrode assembly (510);
a lower jig (430) configured to support a first section (532) of a strip terminal (530) connected to the lead tab (520) and ) to move in a vertical direction and/or in a front-rear direction with respect to the electrode assembly (510);
an upper jig (440) disposed above the lower jig (430) and configured to press the first section (532) of the strip terminal (530); and
a bending roller (450) configured to bend a second section (534) of the strip terminal (530) connected to the first section (532) of the strip terminal (530) by moving up and down along the vertical direction along a rear side of the lower jig (430),
wherein the bending roller (450) is configured to be lowered so that an angle between the first section (532) and the second section (534) becomes 90 degrees or less.

2. The device (400) for manufacturing the secondary battery (100) as claimed in claim 1, wherein the bending roller (450) is configured to be lowered a first time so that the angle between the first section (532) and the second section (534) becomes 90 degrees.

3. The device (400) for manufacturing the secondary battery (100) as claimed in claim 2, wherein a height of an upper surface of the lower jig (430) supporting the first section (532) corresponds to a height of an upper surface of the support block (410) supporting the electrode assembly (510).

4. The device (400) for manufacturing the secondary battery (100) as claimed in claim 2 or 3, wherein the bending roller (450) is configured to be lowered a second time so that the angle between the first section (532) and the second section (534) becomes less than 90 degrees.

5. The device (400) for manufacturing the secondary battery (100) as claimed in claim 2 or 3, wherein the bending roller (450) is configured to be lowered a second time so that the angle between the first section (532) and the second section (534) becomes 40 degrees or more and less than 90 degrees.

6. The device (400) for manufacturing the secondary battery (100) as claimed in claim 4 or 5, wherein the device is configured such that when the bending roller (450) is lowered the second time, a height of an upper surface of the lower jig (430) supporting the first section (532) is higher than a height of an upper surface of the support block (410) supporting the electrode assembly (510).

7. The device (400) for manufacturing the secondary battery (100) as claimed in any of claims 1 to 6, further comprising a front guide (420) disposed above the support block (410) and configured to press the lead tab (520).

8. A method of manufacturing a secondary battery (100), the method comprising:
disposing (S1310) an electrode assembly (510) on a support block (410), the electrode assembly (510) including a lead tab (520) protruding from a side of the electrode assembly (510);
disposing (S1320) a first section (532) of a strip terminal (530) connected to the lead tab (520) on a lower jig (430);
lowering (S1330) an upper jig (440) to press and fix the first section (532);
lowering (S1340) a bending roller (450) along a side of the lower jig (430) to bend a second section (534) of the strip terminal (530) connected to the first section (532) a first time;
raising (S1350) the lower jig (430) and lowering the bending roller (450) a second time along the side of the lower jig (430) to bend the second section (534) a second time; and
moving (S1360) the lower jig (430) toward the electrode assembly (510) to bend the lead tab (520).

9. The method for manufacturing the secondary battery (100) as claimed in claim 8, further comprising setting a height of an upper surface of the lower jig (430) supporting the first section (532) to correspond to a height of an upper surface of the support block (410) supporting the electrode assembly (510).

10. The method for manufacturing the secondary battery (100) as claimed in claim 8 or 9, wherein, when the second section (534) is bent a second time, a height of an upper surface of the lower jig (430) supporting the first section (532) is set to be higher than a height of an upper surface of the support block (410) supporting the electrode assembly (510).

11. The method for manufacturing the secondary battery (100) as claimed in any of claims 8 to 10, wherein, when the second section (534) is bent the first time, an angle between the first section (532) and the second section (534) becomes 90 degrees.

12. The method for manufacturing the secondary battery (100) as claimed in any of claims 8 to 11, wherein the second section (534) is bent the second time such that an angle between the first section (532) and the second section (534) becomes less than 90 degrees.

13. The method for manufacturing the secondary battery (100) as claimed in any of claims 8 to 12, wherein the bending of the lead tab (520) further comprises raising the lower jig (430) before moving the lower jig (430) forward toward the electrode assembly (510).

14. The method for manufacturing the secondary battery (100) as claimed in claim 13, wherein the lead tab (520) is bent to face the one side of the electrode assembly (510), and
wherein, as the lead tab (520) is bent, the strip terminal (530) rotates so that the first section (532) of the strip terminal (530) is disposed to face the side of the electrode assembly (510).

15. The method for manufacturing the secondary battery (100) as claimed in claim 14, wherein the first section (532) of the strip terminal (530) is spaced from the side of the electrode assembly (510) by a predetermined distance or more.
